# EUROPEAN PATENT SPECIFICATION

(11) **EP 2 622 843 B1**
(45) Date of publication and mention of the grant of the patent: **03.04.2019**
(21) Application number: 11761450.3
(22) Date of filing: 15.09.2011
(51) Int. Cl.: H04N 5/335, H04N 5/372, H04N 5/369, H04N 5/361

(54) **Linear image sensor with plurality of output registers**
ZEILENFÖRMIGER BILDAUFNAHMESENSOR MIT MEHREREN AUSGÄNGEN
CAPTEUR LINÉAIRE D'IMAGE MUNI DE MULTIPLES SORTIES

(30) Priority: 10.03.2011 US 201113044585; 10.03.2011 US 201113044583; 17.12.2010 US 971743; 30.09.2010 US 388015 P; 30.09.2010 US 388022 P
(43) Date of publication of application: 07.08.2013
(73) Proprietor: Semiconductor Components Industries, LLC, Phoenix, AZ 85008 (US)
(72) Inventor: NELSON, Edward, Tichenor, Rochester NY 14650-2201 (US); WANG, Shen, Rochester NY 14650-2201 (US)
(74) Representative: Manitz Finsterwald Patent- und Rechtsanwaltspartnerschaft mbB
(86) International application number: PCT/US2011/051715
(87) International publication number: WO 2012/044464

(56) References cited:
- JP-A- 59 075 772
- US-A1- 2003 030 736

## Description

### TECHNICAL FIELD

The present invention relates to image sensors for use in digital cameras and other types of image capture devices, and more particularly to linear Charge-Coupled Device (CCD) image sensors.

### BACKGROUND

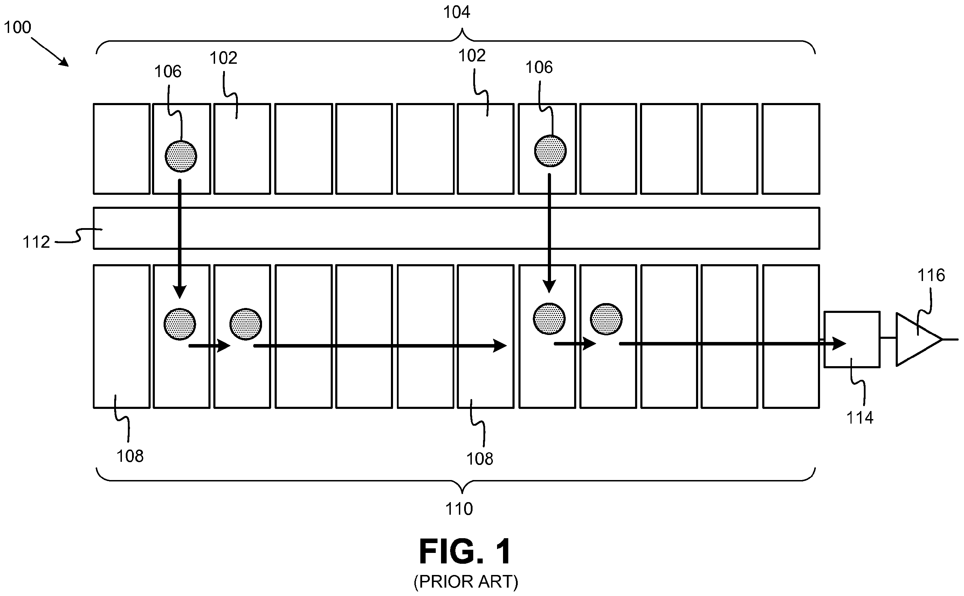

**FIG. 1** depicts a simplified block diagram of a prior art single output linear array CCD image sensor. Image sensor 100 includes a single linear row of photodetectors 102, also known as a linear array 104. Light is converted to photo-carriers (i.e., electrons or holes) by the photodetectors 102. The photo-carriers are subsequently simultaneously transferred, as discrete charge packets 106, to shift register elements 108 in horizontal CCD shift register 110 using transfer mechanism 112. The charge packets 106 are then serially transferred or shifted to charge sensing node 114 by electrically clocking the shift register elements 108. Charge sensing node 114 typically includes a floating diffusion (not shown) that is connected to output buffer 116.

With a single output linear image sensor, charge sensing node 114 and output buffer 116 are located directly at the end of horizontal CCD shift register 110. This placement allows an un-impeded transfer of charge to charge sensing node 114 and output buffer 116. The direction of charge transfer is substantially linear through horizontal CCD shift register 110, charge sensing node 114, and output buffer 116. There is no spatial interference between horizontal CCD shift register 110 and charge sensing node 114 and output buffer 116, allowing the design of each to be optimized for speed and signal quality.

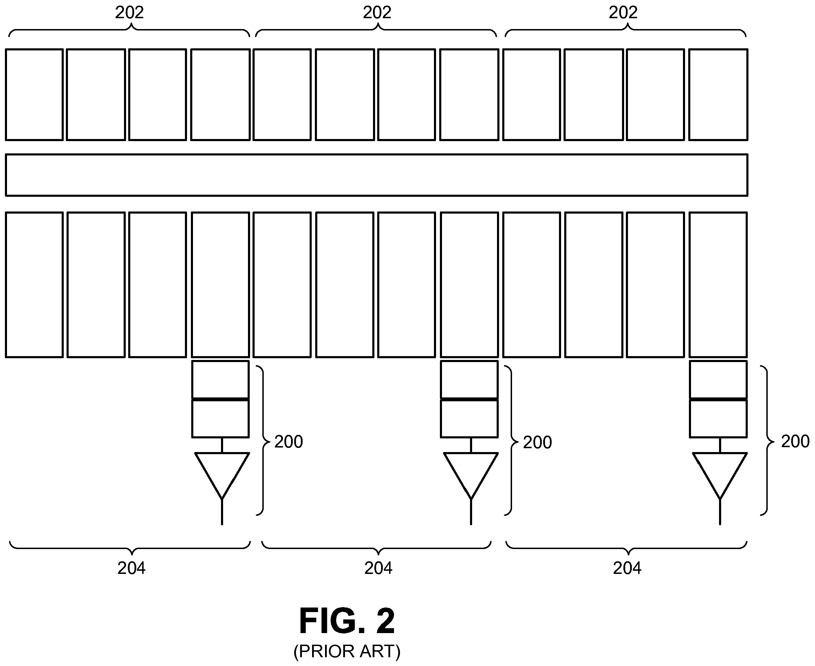

The operating speed of a linear array CCD image sensor is expressed as lines read out per second. The operating speed is typically increased by using multiple outputs. **FIG. 2** illustrates a simplified block diagram of a multiple output linear array CCD image sensor in accordance with the prior art. Each output structure 200 is connected to, and senses the signal from a sub-array 202 of photodetectors, and is located at the end of each horizontal CCD shift register 204. The problem with conventional multiple output linear image sensors is that the output structures cannot be located in close proximity to the end of each horizontal CCD shift register. The direction of charge transfer is interrupted and not linear through horizontal CCD shift register 110, charge sensing node 114, and output buffer 116. This is because the size of the output structure is much larger than the pitch of the photodetectors. And the photodetectors must be arranged in an un-interrupted array. Thus, there is a physical interference between the output structures and regular pattern of the photodetectors and horizontal CCD shift registers.

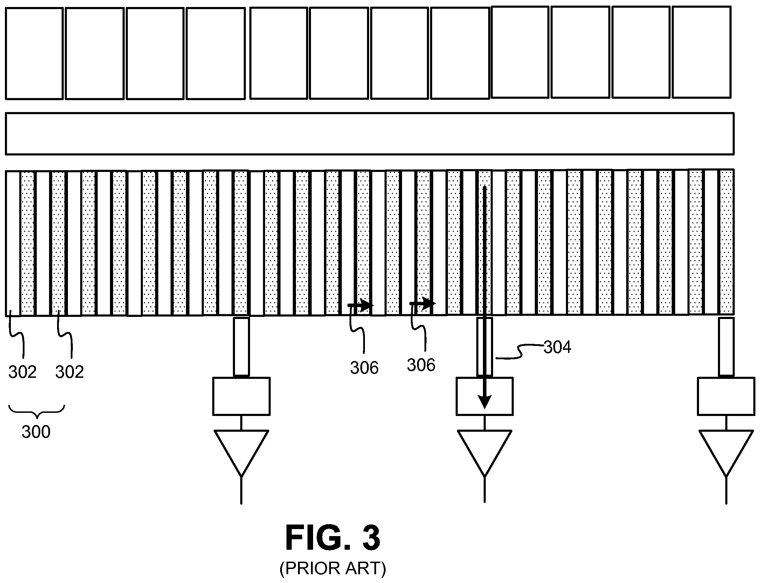

In the illustrated embodiment of FIGS. 2 and 3, it is necessary to re-direct the transfer of charge through turns or additional shift register elements that interfere in the charge transfer process. These turns increase the distance that the charge must be transferred to reach the output structure, as shown by the arrows in FIG. 3. Each shift register element 300 includes four phases 302 and charge transfer is between each phase in the FIG. 3 embodiment. The charge transfer distance 304 from the last phase to the output is much larger than the charge transfer distance 306 between the phases of the horizontal CCD shift register. The longer charge transfer distance 304 results in a reduced electric field to shift charge. The smaller electric field in turn causes charge transfer inefficiency or the incomplete transfer of charge to the output structure. Additionally, the smaller electric field produces a distortion of the output by mixing the signals of adjacent pixels together. This transfer inefficiency can also result in a loss of part of the signal for the first pixel of each sub-array output structure. JP 59 075772 A, published April 28, 1984 discloses a linear array image sensor with a row of photodetectors (21a, 21b, 21c, etc) separated into groups, with dark reference pixels (30, 31, 32) added to various positions along the row of photodetectors.

US 2003/030736 A1, published February 13, 2003, also discloses a linear array image sensor in which dark pixels are combined with photodetectors at points inside the linear array.

### SUMMARY

This problem is solved by the subject matter of the attached independent claims.

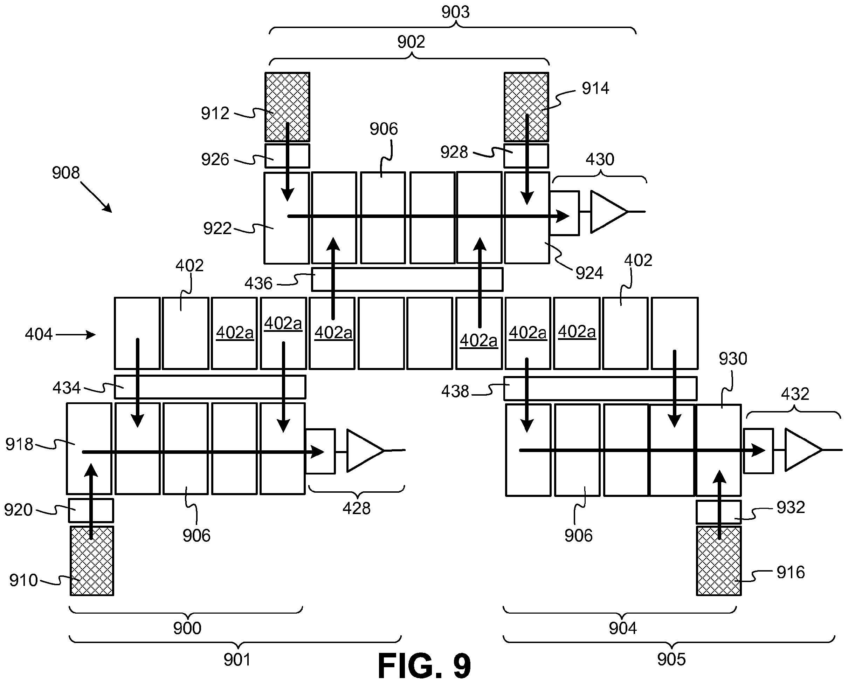

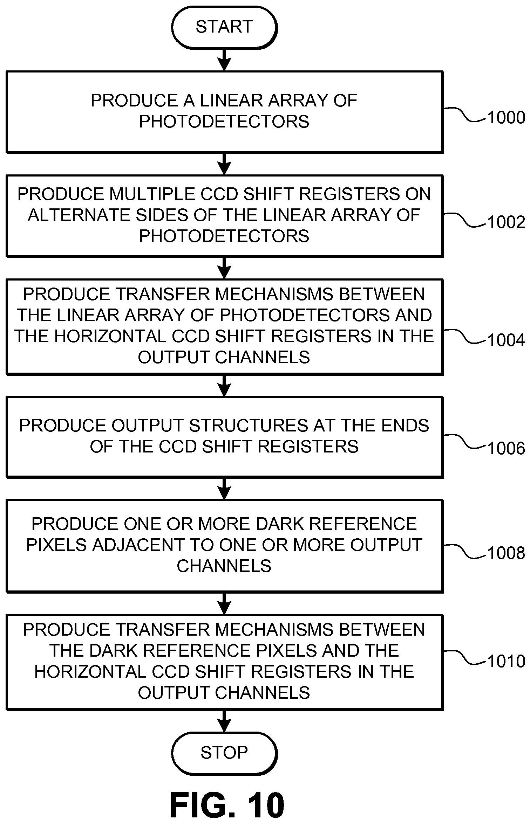

Enabling disclosure for the invention is found in embodiment of Figures 9 and 10. The remaining embodiments are to be understood as examples which do not describe parts of the present invention.

### BRIEF DESCRIPTION OF THE FIGURES

Embodiments of the invention are better understood with reference to the following drawings. The elements of the drawings are not necessarily to scale relative to each otther.
**FIG. 1** depicts a simplified block diagram of a single output linear array CCD image sensor in accordance with the prior art;
**FIG. 2** illustrates a simplified block diagram of a multiple output linear array CCD image sensor in accordance with the prior art;
**FIG. 3** depicts a simplified block diagram of a multiple output linear array CCD image sensor with a four-phase horizontal CCD shift register in accordance with the prior art;
**FIG. 4** illustrates a simplified block diagram of a multiple output linear array CCD image sensor;
**FIGS. 5-7** depict directions for shifting charge through the output channels in a linear array CCD image sensor having multiple outputs;
**FIG. 8** illustrates a linear pixel array in accordance with the prior art;
**FIG. 9** depicts a simplified block diagram of a multiple output linear array CCD image sensor in a second embodiment in accordance with the invention; and
**FIG. 10** is a flowchart of a method for producing linear array CCD image sensor 908 shown in **FIG. 9****.**

### DETAILED DESCRIPTION

Throughout the specification and claims the following terms take the meanings explicitly associated herein, unless the context clearly dictates otherwise. The meaning of "a," "an," and "the" includes plural reference, the meaning of "in" includes "in" and "on." The term "connected" means either a direct electrical connection between the items connected or an indirect connection through one or more passive or active intermediary devices. The term "circuit" means either a single component or a multiplicity of components, either active or passive, that are connected together to provide a desired function. The term "signal" means at least one current, voltage, or data signal.

Additionally, directional terms such as "on", "over", "top", "bottom", "left", "right", are used with reference to the orientation of the Figure(s) being described. Because components of embodiments of the present invention can be positioned in a number of different orientations, the directional terminology is used for purposes of illustration only and is in no way limiting. When used in conjunction with layers of an image sensor wafer or corresponding image sensor, the directional terminology is intended to be construed broadly, and therefore should not be interpreted to preclude the presence of one or more intervening layers or other intervening image sensor features or elements. Thus, a given layer that is described herein as being formed on or formed over another layer may be separated from the latter layer by one or more additional layers. When used in conjunction with the construction or operation of an image sensor, the directional terminology is intended to be construed broadly, and therefore should not be interpreted to preclude alternate constructions or operations.

Referring to the drawings, like numbers indicate like parts throughout the views.

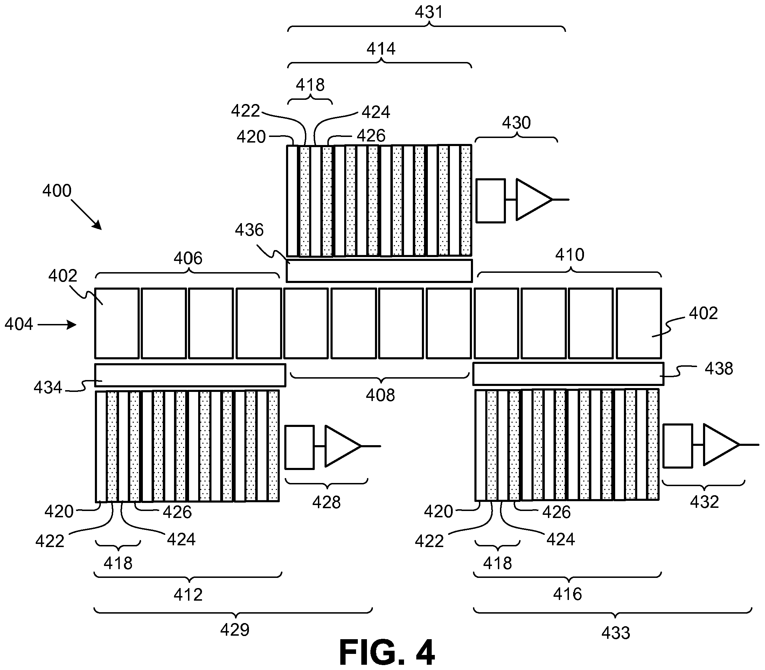

**FIG. 4** illustrates a simplified block diagram of a multiple output linear array CCD image sensor. Image sensor 400 includes multiple photodetectors 402 arranged in a linear array 404. For simplicity, only twelve photodetectors 402 are shown. Those skilled in the art will recognize a linear array can include any number of photodetectors.

Contiguous photodetectors 402 are grouped into distinct sub-arrays 406, 408, 410. Each sub-array 406, 408, 410 includes two or more photodetectors 402 in an embodiment in accordance with the invention. Horizontal CCD shift registers 412, 414,416 include multiple shift register elements 418 having one or more phases per photodetector. In the illustrated embodiment, each shift register element 418 has four phases 420, 422, 424, 426 for each photodetector 402.

Each horizontal CCD shift register 412, 414, 416 is connected to an output structure 428, 430, 432. The horizontal CCD shift register and the output structure are positioned in a linear arrangement with respect to each other such that a path of charge transfer through the horizontal CCD shift register and output structure is an un-interrupted linear (or substantially linear) path. Each horizontal CCD shift register and associated output structure combined form an output channel 429, 431, 433. Output structures 428, 430, 432 each include a charge sensing node and an output buffer in an embodiment in accordance with the invention.

At least one of the phases in shift register element 418 receives a charge packet directly from photodetectors 402. In the illustrated embodiment, phase 420 in each shift register element 418 receives a charge packet directly from the photodetectors 402 using transfer mechanisms 434, 436, 438, respectively. The charge packets are then serially shifted to respective output structures. Horizontal CCD shift registers 412, 416 and output structures 428,432, respectively, are disposed on one side of linear array 404 while horizontal CCD shift register 414 and output structure 430 are disposed on the opposite side of linear array 404. Thus, output channels 429, 431, 433 are alternately positioned on opposite sides of linear array 404. Each successive output channel, or every other output channel, is disposed on an alternate side of linear array 404. Such placement of the output channels allow the output structures 428,430,432 to be located directly at the end of each respective horizontal CCD shift register 412, 414, 416. This alternating arrangement allows an un-impeded transfer of charge to the output structures 428, 430, 432 because the path of charge direction is a substantially linear path. There is no spatial interference between the horizontal CCD shift registers 412, 414, 416 and output structures 428, 430, 434, thereby allowing the design of both the horizontal CCD shift registers and the output structures to be optimized for speed and signal quality.

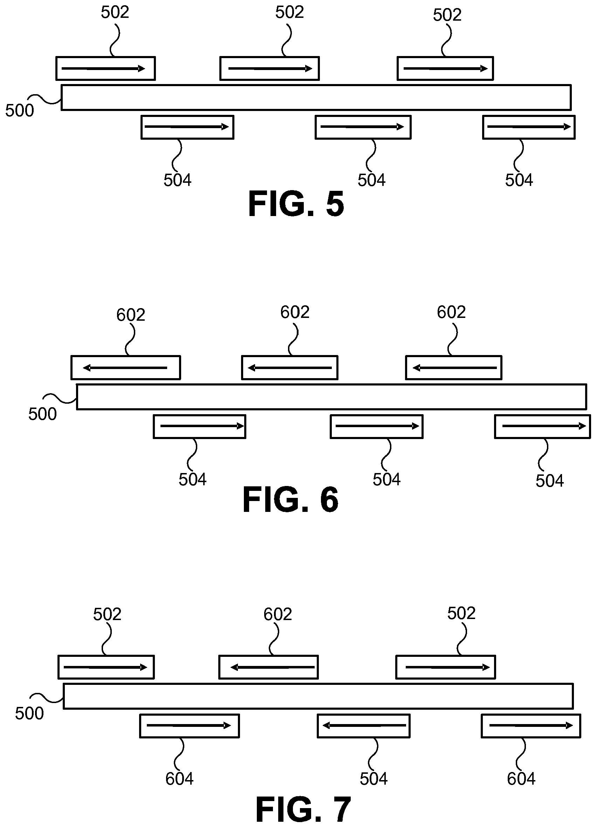

**FIGS. 5-7** depict directions for shifting charge through the output channels in a linear array CCD image sensor having multiple outputs. Each horizontal CCD shift register and output structure in an output channel may be independently oriented to shift charge to the "left" or to the "right" using techniques known in the art. In **FIG. 5****,** output channels 502 are disposed on one side of linear array 500 and output channels 504 on the other side of linear array 500. Output channels 502, 504 each include a horizontal CCD shift register and an output structure . The horizontal CCD shift registers in output channels 502, 504 all shift charge in one direction (e.g., to the right).

In **FIG. 6****,** output channels 602 are disposed on one side of linear array 500 and output channels 504 on the other side of linear array 500. Output channels 504, 602 each include a horizontal CCD shift register and an output structure. The horizontal CCD shift registers in output channels 602 all shift charge in one direction (e.g., to the left) while the horizontal CCD shift registers in output channels 504 all shift charge in the opposite direction (e.g., to the right).

And finally, In **FIG.7****,** output channels 502, 602 are disposed on one side of linear array 500 and output channels 504,604 on the other side of linear array 500. The horizontal CCD shift registers in output channels 504, 602 all shift charge in one direction (e.g., to the left) while the horizontal CCD shift registers in output channels 502,604 all shift charge in the opposite direction (e.g., to the right).

Other embodiments in accordance with the invention can produce a larger linear array by abutting two smaller linear arrays end-to-end where the horizontal CCD shift registers and output structures associated with the two smaller linear arrays shift charge in opposite directions. Thus, one horizontal CCD shift register can be associated with two sub-arrays of photodetectors in a linear array and an output structure is connected to both ends of the horizontal shift register. Such patterns can be aggregated into larger regular or irregular patterns.

The horizontal CCD shift registers match the pitch of the photodetectors in an embodiment in accordance with the invention. Arranging the output channels as shown in **FIGS. 5-7** produces a multiple output linear image sensor that does not suffer the CTE degradation of turns or other structures. Instead, the multiple output linear arrays can have the same signal quality as a single output linear array image sensor. This improved CTE may also be used to operate at a higher line rate.

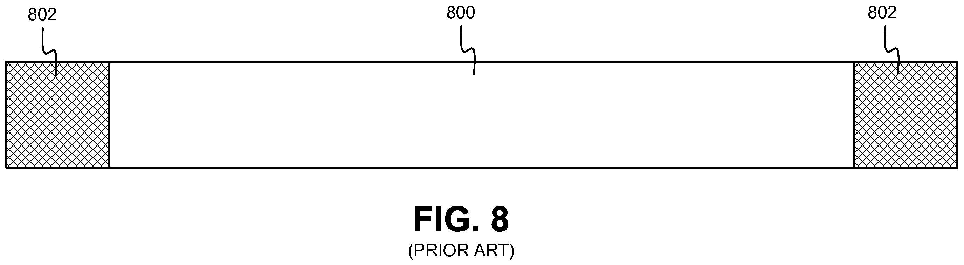

Referring now to **FIG. 8****,** there is shown a linear pixel array in accordance with the prior art. Linear array 800 includes multiple photo-generating photodetectors or pixels. Dark reference pixel section 802 is disposed at both ends of linear pixel array 800. Dark reference pixel sections typically include multiple dark reference pixels. Dark reference pixels typically are photosensitive pixels that are covered by an opaque shield, such as a metal shield. Dark reference pixels are not used to produce photo-generated charge carriers (i.e., charge produced by incident light). Instead, dark reference pixels are used to determine compensation values for dark charge that is produced by the pixels when not illuminated. All pixels (both dark reference and photo-generating) produce some amount of charge in non-illuminated conditions ("dark charge"). The amount of dark charge produced by each pixel can differ from other pixels due to variations in the manufacturing process. In pixels that also produce photo-generated charge, the dark charge constitutes noise that is added to the photo-generated charge. Thus, the charge produced by the photo-generating pixels can be erroneous because the charge does not accurately represent the amount of light received by a photo-generated pixel.

Signals representing the amount of dark charge output from the dark reference pixels are subtracted from the signals produced by the photo-generating pixels, thereby eliminating, or at least reducing, the amount of dark charge included in the signals produced by the photo-generating pixels. In conventional linear array image sensors, dark reference pixels 802 are placed only at the ends of the linear array 800. Dark reference pixels 802 cannot be placed within linear array 800 because the dark reference pixels do not produce photo-generated charge when an image is captured. If interspersed within linear array 800, the dark reference pixels would produce dark lines in a captured image. Dark reference pixels are therefore placed only at the ends of linear array 800.

**FIG. 9** depicts a simplified block diagram of a multiple output linear array CCD image sensor in a second embodiment in accordance with the invention. Contiguous photodetectors 402, 402a are grouped into distinct sub-arrays, as with the embodiment illustrated in **FIG. 4****.** Horizontal CCD shift registers 900, 902, 904 include multiple shift register elements 906 having one or more phases per photodetector. Photodetectors 402 transfer photo-generated charge to respective shift register elements 906 in horizontal CCD shift registers 900, 902, 904.

Each horizontal CCD shift register 900, 902, 904 is connected to an output structure 428, 430, 432. The horizontal CCD shift register and the output structure are positioned in a linear arrangement with respect to each other such that the path of charge transfer through the horizontal CCD shift register and the output structure is an un-interrupted linear (or substantially linear) path. Each horizontal CCD shift register and associated output structure combined form an output channel 901, 903, 905. Output channels 901 and 905 are disposed on one side of linear array 404 while output channel 903 is disposed on the opposite side of linear array 404.

Image sensor 908 includes dark reference pixels 910, 912, 914, 916. Although only four dark reference pixels are shown, those skilled in the art will appreciate that an image sensor can include any number of dark reference pixels. Dark reference pixel 910 is electrically connected to additional shift register element 918 in horizontal CCD shift register 900. Dark reference pixel 910 transfers charge to additional shift register element 918 using transfer mechanism 920.

Dark reference pixels 912, 914 are electrically connected to additional shift register elements 922, 924 in horizontal CCD shift register 902. Dark reference pixels 912, 914 transfer charge to respective additional shift register elements 922, 924 using transfer mechanisms 926, 928. And finally, dark reference pixel 916 is electrically connected to additional shift register element 930 in horizontal CCD shift register 904 and transfers charge to the additional shift register element using transfer mechanism 932. The signals output from output structures 428, 430, 432 include non-image (dark) charge produced by dark reference pixels 910, 912, 914, 916 and dark and photo-generated charge carriers output from photodetectors 402, 402a.

Shift register elements 918, 922 are positioned at one end of horizontal CCD shift registers 900, 902, the end farthest from output structures 428, 430. Shift register elements 924, 926 are positioned at the other end of horizontal CCD shift registers 902, 904, the end closest to output structures 430, 432. One advantage to the embodiment illustrated in **FIG. 9** is that dark reference pixels can be placed at locations other than the ends of linear array 404. For example, in the illustrated embodiment, dark reference pixels 912, 914 are positioned near photo-generating photodetectors (e.g., photodetectors 402a) within linear array 404. This allows the dark charge produced by dark reference pixels 912, 914 to better represent the amount of dark charge produced by the photo-generating photodetectors 402a.

Referring now to **FIG. 10****,** there is shown a flowchart of a method for producing image sensor 908 shown in **FIG. 9****.** Initially, a linear array of photodetectors is produced, as shown in block 1000. The linear array of photodetectors can be produced using techniques known in the art. For example, a masking layer can be deposited over a substrate and patterned to provide openings at the locations where the photodetectors will be formed. A dopant having a particular conductivity type is then implanted into the substrate to produce the photodetectors. The photodetectors can be any type of photodetector, including pinned and unpinned photodiodes.

Next, as shown in block 1002, multiple horizontal CCD shift registers are produced on one side of the linear array. Multiple horizontal CCD shift registers are also produced on the opposite side of the linear array. The horizontal CCD shift registers are produced such that each successive output channel is disposed on an alternate side of the linear array.

The horizontal CCD shift registers can be produced using techniques known in the art. For example, a masking layer can be deposited over the substrate and patterned to provide openings at the locations where each shift register element, or phase in each shift register element, will be formed. A dopant having a particular conductivity type is then implanted into the substrate to produce the shift register element or phase. Barrier implants may also be formed between shift register elements or phases. Also, electrodes are produced over each shift register element or phase and electrically connected to respective voltage clocking signals that are used to shift charge packets through the horizontal CCD shift registers. Typically, the electrodes are formed in electrode layers. In a two phase CCD shift register, alternating electrodes (every other electrode) form one electrode layer and the remaining electrodes a second electrode layer. In a four phase CCD shift register, electrodes disposed over the first and third phase (or the second and fourth phase) form one electrode layer and the remaining electrodes a second electrode layer.

Next, as shown in block 1004, the transfer mechanisms between the linear array and the horizontal CCD shift registers are produced. The transfer mechanisms can be produced using techniques known in the art. The output structures are then produced at the end or ends of the horizontal CCD shift registers (block 1006). For example, the output structures can be produced by depositing a series of masking layers over the substrate and patterning the masking layers to provide openings at the locations where the charge sensing nodes and the components of the output buffer will be formed. Dopants having particular conductivity types are then implanted into the substrate to produce the charge sensing nodes and output buffers.

One or more dark reference pixels are produced adjacent to the horizontal CCD shift registers in one or more output channels, as shown in block 1008. The dark reference pixel or pixels are formed on the side of the horizontal CCD shift register that is opposite the side immediately adjacent to the linear array. The dark reference pixels can be produced when the linear array of photodetectors are formed. An opaque shield is then formed over the dark reference pixels using techniques known in the art.

If dark reference pixels are produced, an additional shift register element is included in respective horizontal CCD shift registers for each dark reference pixel associated with that horizontal CCD shift register. The additional shift register elements can be formed when the horizontal CCD shift registers are produced at blocks 1002 and 1004.

And finally, as shown in block 1010, the transfer mechanisms between the dark reference pixels and the horizontal CCD shift registers in the output structures are produced. The transfer mechanisms can be produced simultaneously with the transfer mechanisms between the linear array and the horizontal CCD shift registers.

Those skilled in the art will recognize that other embodiments in accordance with the invention can modify the order of the blocks shown in **FIG. 10****.** For example, the transfer mechanisms can be produced before the output structures, or the linear array can be formed after the transfer mechanisms are formed. Multiple components included in the linear array, horizontal shift registers, transfer mechanisms, output structures, or dark reference pixels can be produced at the same time by patterning the masking layers appropriately. Additionally, other components in an image sensor can be produced in between the processes shown in **FIG. 10****.** And finally, some of the blocks can be omitted in other embodiments in accordance with the invention. By way of example only, blocks 1008 and 1010 can be omitted.

The invention has been described in detail with particular reference to certain preferred embodiments thereof, but it will be understood that variations and modifications can be effected within the scope of the invention. For example, embodiments in accordance with the invention have been described in conjunction with a four-phase horizontal CCD shift register. Other embodiments in accordance with the invention can include one or more phases. The output structures can include additional or different components than the charge sensing node and output buffer described herein.

### PARTS LIST

- 100: linear array CCD image sensor
- 102: photodetector
- 104: linear array
- 106: charge packet
- 108: shift register element
- 110: horizontal CCD shift register
- 112: transfer mechanism
- 114: charge sensing node
- 116: output buffer
- 200: output structure
- 202: sub-array of photodetectors
- 204: horizontal CCD shift register
- 300: shift register element
- 302: phase
- 304: charge transfer distance to output
- 306: charge transfer distance between phases
- 400: linear array CCD image sensor
- 402: photodetector
- 402a: photodetector
- 404: linear array of photodetectors
- 406: sub-array of photodetectors
- 408: sub-array of photodetectors
- 410: sub-array of photodetectors
- 412: horizontal CCD shift register
- 414: horizontal CCD shift register
- 416: horizontal CCD shift register
- 418: shift register element
- 420: phase
- 422: phase
- 424: phase
- 426: phase
- 428: output structure
- 429: output channel
- 430: output structure
- 431: output channel
- 432: output structure
- 433: output channel
- 434: transfer mechanism
- 436: transfer mechanism
- 438: transfer mechanism
- 500: linear array
- 502: output channel
- 504: output channel
- 602: output channel
- 604: output channel
- 800: linear array
- 802: dark reference pixels
- 900: horizontal CCD shift register
- 901: output channel
- 902: horizontal CCD shift register
- 903: output channel
- 904: horizontal CCD shift register
- 905: output channel
- 906: shift register element
- 908: linear array CCD image sensor
- 910: dark reference pixel
- 912: dark reference pixel
- 914: dark reference pixel
- 916: dark reference pixel
- 918: shift register element
- 920: transfer mechanism
- 922: shift register element
- 924: shift register element
- 926: transfer mechanism
- 928: transfer mechanism
- 930: shift register element
- 932: transfer mechanism

## Claims

1. A Charge-Coupled Device (CCD) image sensor, comprising:
a linear array of photodetectors (404), wherein the linear array of photodetectors includes a single linear row of a plurality of photodetectors (402/402a) having two ends and two opposite sides along the single linear row and arranged into a plurality of sub-arrays (406/408/410) and each sub-array includes two or more photodetectors; and
an output channel connected to each sub-array of photodetectors with each output channel including a horizontal CCD shift register (412/414/416) and an output structure (428/430/432) connected to an end of the horizontal CCD shift register in a linear arrangement with respect to each other such that a path of charge transfer through the horizontal CCD shift register and the output structure is substantially linear, wherein output channels are alternately positioned on opposite sides of the single linear row, wherein: each horizontal CCD shift register further comprises:
a plurality of shift register elements (906) with one shift register element associated with each photodetector in a respective sub-array **characterized in that** each horizontal CCD shift register further comprises:
one or more additional shift register elements (918);
a transfer mechanism (434/436/438) disposed between each shift register element (906) and respective photodetector (402/402a) such as to have each shift register element (906) receive a charge packet directly from the respective photodetector (402/402a); and
a dark reference pixel (910) not included in the linear array of photodetectors and electrically connected to one of said additional shift register elements in the at least one horizontal CCD shift register opposite to the sub-arrays.

2. The CCD image sensor as in claim 1, wherein at least one of the one or more additional shift register elements (918) is disposed at an end of the at least one horizontal CCD shift register (900) farthest from the output structure.

3. The CCD image sensor as in claim 1, wherein at least one of the one or more additional shift register elements (908) is disposed at an end of the at least one horizontal CCD shift register (900) immediately adjacent to the output structure (428).

4. The CCD image sensor as in any one of claims 1 through 3, wherein each output structure (428/430/432) includes a charge sensing node.

5. The CCD image sensor as in claim 4, wherein each output structure (428/430/432) further includes an output buffer connected to the charge sensing node.

6. A method for producing multiple outputs for a linear array image sensor, the method comprising:
providing a linear array of photodetectors in a single linear row of a plurality of photodetectors (402/402a) having two ends and two opposite sides along the single linear row,
providing a first plurality of output channels (901/905) on one side of the linear array of photodetectors (404), wherein the output channels in the first plurality of output channels are each connected to a distinct sub-array of photodetectors (406/410) in the linear array of photodetectors (404);
providing a second plurality of output channels (903) on another side opposite the one side of the linear array of photodetectors (404), wherein the first and second plurality of output channels (901/905/903) are alternately positioned on opposite sides of the single linear row, wherein the output channels in the second plurality of output channels are each connected to a distinct sub-array of photodetectors (408) in the linear array of photodetectors (404), and
wherein each output channel in the first (901/905) and second (903) plurality of output channels includes a horizontal CCD shift register (900/902/904) and an output structure (428/430/432) connected to an end of the horizontal CCD shift register (900/902/904) in a linear arrangement such that a path of charge transfer through the horizontal CCD shift register (900/902/904) and the output structure (428/430/432) is substantially linear; wherein each horizontal CCD shift register comprises a plurality of shift register elements with one shift register element associated with each photodetector in a respective sub-array of photodetectors;
**characterized by**:
providing one or more additional shift register elements (918/922/924/930) in at least one horizontal CCD shift register at an end of the horizontal CCD shift register;
providing a transfer mechanism (434/436/438) between the horizontal CCD shift registers (900/902/904) and respective sub-arrays (406/408/410) of photodetectors such as to have each horizontal CCD shift register (900/902/904) receive charge packets directly from the respective sub-arrays (405/408/410); and
providing a dark reference pixel (910/912/914/916) not included in the linear array of photodetectors and electrically connected to one of said additional shift register elements opposite to the sub-arrays of photodetectors.

7. The method as in claim 6, further comprising providing the one or more additional shift register elements (918/922/924/930) in the at least one horizontal CCD shift register at an end of the horizontal CCD shift register farthest from the output structure 428/430/432).

8. The method as in claim 6, further comprising providing the one or more additional shift register elements in the at least one horizontal CCD shift register at an end of the horizontal CCD shift register immediately adjacent to the output structure (428/430/432).

9. The method as in claim 7, further comprising providing the dark reference pixel (910/912) electrically connected to each additional shift register element at the end of the horizontal CCD shift register farthest from the output structure (428/430/432).

10. The method as in claim 8, further comprising providing the dark reference pixel (914/916) electrically connected to each additional shift register element at the end of the horizontal CCD shift register immediately adjacent to the output structure (428/430/432).

## Patentansprüche

1. Bildsensor mit Ladungskopplungsvorrichtung (CCD-Bildsensor), der umfasst:
ein lineares Feld (404) aus Fotodetektoren, wobei das lineare Feld aus Fotodetektoren eine einzige lineare Zeile aus einer Vielzahl von Fotodetektoren (402/402a) mit zwei Enden und zwei entgegengesetzten Seiten entlang der einzigen linearen Zeile umfasst und in einer Vielzahl von Teilfeldern (406/408/410) angeordnet ist und jedes Teilfeld zwei oder mehr Fotodetektoren enthält; und
einen Ausgabekanal, der mit jedem Teilfeld aus Fotodetektoren verbunden ist, wobei jeder Ausgabekanal ein horizontales CCD-Schieberegister (412/414/416) und eine Ausgabestruktur (428/430/432) enthält, die mit einem Ende des horizontalen CCD-Schieberegisters in einer linearen Anordnung relativ zueinander derart verbunden ist, dass eine Strecke eines Ladungstransfers durch das horizontale CCD-Schieberegister und die Ausgabestruktur hindurch im Wesentlichen linear ist, wobei Ausgabekanäle abwechselnd an entgegengesetzten Seiten der einzigen linearen Zeile positioniert sind, wobei:
jedes horizontale CCD-Schieberegister ferner umfasst:
eine Vielzahl von Schieberegisterelementen (906), wobei jedem Fotodetektor in einem jeweiligen Teilfeld ein Schieberegisterelement zugeordnet ist, **dadurch gekennzeichnet, dass** jedes horizontale CCD-Schieberegister ferner umfasst:
ein oder mehrere zusätzliche Schieberegisterelemente (918);
einen Transfermechanismus (434/436/438), der zwischen jedem Schieberegisterelement (906) und einem entsprechenden Fotodetektor (402/402a) derart angeordnet ist, dass veranlasst wird, dass jedes Schieberegisterelement (906) ein Ladungspaket direkt von dem entsprechenden Fotodetektor (402/402a) empfängt; und
ein dunkles Referenzpixel (910), das in dem linearen Feld aus Fotodetektoren nicht enthalten ist und mit einem der zusätzlichen Schieberegisterelemente in dem mindestens einen horizontalen CCD-Schieberegister entgegengesetzt zu den Teilfeldern elektrisch verbunden ist.

2. CCD-Bildsensor nach Anspruch 1, wobei mindestens eines des einen oder der mehreren zusätzlichen Schieberegisterelemente (918) an einem Ende des mindestens einen horizontalen CCD-Schieberegisters (900) angeordnet ist, das von der Ausgabestruktur am weitesten entfernt ist.

3. CCD-Bildsensor nach Anspruch 1, wobei mindestens eines des einen oder der mehreren zusätzlichen Schieberegisterelemente (908) an einem Ende des mindestens einen horizontalen CCD-Schieberegisters (900) angeordnet ist, das der Ausgabestruktur (428) unmittelbar benachbart ist.

4. CCD-Bildsensor nach einem der Ansprüche 1 bis 3, wobei jede Ausgabestruktur (428/430/432) einen Ladungserfassungsknoten enthält.

5. CCD-Bildsensor nach Anspruch 4, wobei jede Ausgabestruktur (428/430/432) ferner einen Ausgabepuffer enthält, der mit dem Ladungserfassungsknoten verbunden ist.

6. Verfahren zum Erzeugen mehrerer Ausgaben für einen Bildsensor mit einem linearen Feld, wobei das Verfahren umfasst, dass:
ein lineares Feld aus Fotodetektoren in einer einzigen linearen Zeile aus einer Vielzahl von Fotodetektoren (402/402a) mit zwei Enden und zwei entgegengesetzten Seiten entlang der einzigen linearen Zeile bereitgestellt wird,
eine erste Vielzahl von Ausgabekanälen (901/905) an einer Seite des linearen Felds (404) aus Fotodetektoren bereitgestellt wird, wobei die Ausgabekanäle in der ersten Vielzahl von Ausgabekanälen jeweils mit einem separaten Teilfeld (406/410) aus Fotodetektoren in dem linearen Feld (404) aus Fotodetektoren verbunden sind;
eine zweite Vielzahl von Ausgabekanälen (903) an einer anderen Seite entgegengesetzt zu der einen Seite des linearen Felds aus Fotodetektoren (404) bereitgestellt wird, wobei die erste und zweite Vielzahl von Ausgabekanälen (901/905/903) abwechselnd an entgegengesetzten Seiten der einzigen linearen Zeile positioniert sind, wobei die Ausgabekanäle in der zweiten Vielzahl von Ausgabekanälen jeweils mit einem separaten Teilfeld aus Fotodetektoren (408) in dem linearen Feld (404) aus Fotodetektoren verbunden sind, und wobei jeder Ausgabekanal in der ersten (901/905) und zweiten (903) Vielzahl von Ausgabekanälen ein horizontales CCD-Schieberegister (900/902/904) und eine Ausgabestruktur (428/430/432) enthält, die mit einem Ende des horizontalen CCD-Schieberegisters (900/902/904) in einer linearen Anordnung derart verbunden ist, dass eine Strecke eines Ladungstransfers durch das horizontale CCD-Schieberegister (900/902/904) und die Ausgabestruktur (428/430/432) hindurch im Wesentlichen linear ist;
wobei jedes horizontale CCD-Schieberegister eine Vielzahl von Schieberegisterelementen umfasst, wobei jedem Fotodetektor in einem jeweiligen Teilfeld aus Fotodetektoren ein Schieberegisterelement zugeordnet ist;
**dadurch gekennzeichnet, dass**:
ein oder mehrere zusätzliche Schieberegisterelemente (918/922/924/930) in mindestens einem horizontalen CCD-Schieberegister an einem Ende des horizontalen CCD-Schieberegisters bereitgestellt wird/werden;
ein Transfermechanismus (434/436/438) zwischen den horizontalen CCD-Schieberegistern (900/902/904) und jeweiligen Teilfeldern (406/408/410) aus Fotodetektoren derart bereitgestellt wird, dass veranlasst wird, dass jedes horizontale CCD-Schieberegister (900/902/904) Ladungspakete direkt von den jeweiligen Teilfeldern (405/408/410) empfängt; und
ein dunkles Referenzpixel (910/912/914/916) bereitgestellt wird, das in dem linearen Feld aus Fotodetektoren nicht enthalten ist und mit einem der zusätzlichen Schieberegisterelemente entgegengesetzt zu den Teilfeldern aus Fotodetektoren elektrisch verbunden ist.

7. Verfahren nach Anspruch 6, das ferner umfasst, dass das eine oder die mehreren zusätzlichen Schieberegisterelemente (918/922/924/930) in dem mindestens einen horizontalen CCD-Schieberegister an einem Ende des horizontalen CCD-Schieberegisters bereitgestellt wird/werden, das von der Ausgabestruktur (428/430/432) am weitesten entfernt ist.

8. Verfahren nach Anspruch 6, das ferner umfasst, dass das eine oder die mehreren zusätzlichen Schieberegisterelemente in dem mindestens einen horizontalen CCD-Schieberegister an einem Ende des horizontalen CCD-Schieberegisters bereitgestellt wird/werden, das der Ausgabestruktur (428/430/432) unmittelbar benachbart ist.

9. Verfahren nach Anspruch 7, das ferner umfasst, dass das mit jedem zusätzlichen Schieberegisterelement elektrisch verbundene dunkle Referenzpixel (910/912) an dem Ende des horizontalen CCD-Schieberegisters bereitgestellt wird, das von der Ausgabestruktur (428/430/432) am weitesten entfernt ist.

10. Verfahren nach Anspruch 8, das ferner umfasst, dass das mit jedem zusätzlichen Schieberegisterelement elektrisch verbundene dunkle Referenzpixel (914/916) an dem Ende des horizontalen CCD-Schieberegisters bereitgestellt wird, das der Ausgabestruktur (428/430/432) unmittelbar benachbart ist.

## Revendications

1. Capteur d'image avec dispositif à couplage de charge (CCD), comprenant :
un réseau linéaire de photodétecteurs (404), dans lequel le réseau linéaire de photodétecteurs inclut une unique rangée linéaire d'une pluralité de photodétecteurs (402/402a) ayant deux extrémités et deux côtés opposés le long de l'unique rangée linéaire et agencés dans une pluralité de sous-réseaux (408/406/408/410), et chaque sous-réseau inclut deux ou plusieurs photodétecteurs ; et
un canal de sortie connecté à chaque sous-réseau de photodétecteurs, chaque canal de sortie incluant un registre à décalage à CCD horizontal (412/414/416) et une structure de sortie (428/430/432) connectée à une extrémité du registre à décalage à CCD horizontal dans un agencement linéaire l'une par rapport à l'autre de telle façon qu'un trajet de transfert de charge à travers le registre à décalage à CCD horizontal et la structure de sortie est sensiblement linéaire, dans lequel des canaux de sortie sont positionnés alternativement sur des côtés opposés de l'unique rangée linéaire, dans lequel :
chaque registre à décalage à CCD horizontal comprend en outre :
une pluralité d'éléments de registre à décalage (906), avec un élément de registre à décalage associé à chaque photodétecteur dans un sous-réseau respectif, **caractérisé en ce que** chaque registre à décalage à CCD horizontal comprend en outre :
un ou plusieurs élément(s) de registre à décalage additionnel(s) (918) ;
un mécanisme de transfert (434/436/438) disposé entre chaque élément de registre à décalage (906) et un photodétecteur respectif (402/402a) de telle manière que chaque élément de registre à décalage (906) va recevoir un paquet de charge directement depuis le photodétecteur respectif (402/402a) ; et
un pixel de référence sombre (910) qui n'est pas inclus dans le réseau linéaire de photodétecteurs et qui est connecté électriquement à l'un desdits éléments de registre à décalage additionnels dans au moins un registre à décalage à CCD horizontal à l'opposé des sous-réseaux.

2. Capteur d'image à CCD selon la revendication 1, dans lequel l'un au moins desdits un ou plusieurs éléments de registre à décalage additionnels (918) est disposé à une extrémité dudit au moins un registre à décalage à CCD horizontal (900) la plus éloignée de la structure de sortie.

3. Capteur d'image à CCD selon la revendication 1, dans lequel l'un au moins desdits un ou plusieurs éléments de registre à décalage additionnels (908) est disposé à une extrémité dudit au moins un registre à décalage à CCD horizontal (900) immédiatement adjacente à la structure de sortie (428).

4. Capteur d'image à CCD selon l'une quelconque des revendications 1 à 3, dans lequel chaque structure de sortie (428/430/432) inclut un noeud de détection de charge.

5. Capteur d'image à CCD selon la revendication 4, dans lequel chaque structure de sortie (428/430/432) inclut en outre un tampon de sortie connecté au noeud de détection de charge.

6. Procédé pour produire une multiplicité de sorties pour un capteur d'image à réseau linéaire, le procédé comprenant les étapes consistant à :
fournir un réseau linéaire de photodétecteurs dans une unique rangée linéaire d'une pluralité de photodétecteurs (402/402a) ayant deux extrémités et deux côtés opposés le long de l'unique rangée linéaire,
fournir une première pluralité de canaux de sortie (901/905) sur un côté du réseau linéaire de photodétecteurs (404), dans lequel les canaux de sortie dans la première pluralité de canaux de sortie sont connectés chacun à un sous-réseau distinct de photodétecteurs (406/410) dans le réseau linéaire de photodétecteurs (404) ;
fournir une seconde pluralité de canaux de sortie (903) sur un autre côté opposé au premier côté du réseau linéaire de photodétecteurs (404), dans lequel la première et la seconde pluralité de canaux de sortie (901/905/903) sont positionnés alternativement sur des côtés opposés de l'unique rangée linéaire, dans lequel les canaux de sortie dans la seconde pluralité de canaux de sortie sont connectés chacun à un sous-réseau distinct de photodétecteurs (408) dans le réseau linéaire de photodétecteurs (404), et
dans lequel chaque canal de sortie dans la première pluralité (901/905) et la seconde pluralité (903) de canaux de sortie inclut un registre à décalage à CCD horizontal (900/902/904) et une structure de sortie (428/430/432) connectée à une extrémité du registre à décalage à CCD horizontal (900/902/904) dans un agencement linéaire de telle façon qu'un trajet de transfert de charge à travers le registre à décalage à CCD horizontal (900/902/904) et la structure de sortie (428/430/432) est sensiblement linéaire, dans lequel chaque registre à décalage à CCD horizontal comprend une pluralité d'éléments de registre à décalage, avec un élément de registre à décalage associé à chaque photodétecteur dans un sous-réseau respectif de photodétecteurs ;
**caractérisé par** les étapes consistant à :
fournir un ou plusieurs éléments de registre à décalage additionnels (918/922/924/930) dans au moins un registre à décalage à CCD horizontal à une extrémité du registre à décalage à CCD horizontal ;
fournir un mécanisme de transfert (434/436/438) entre les registres à décalage à CCD horizontal (900/902/904) et des sous-réseaux respectifs (406/408/410) de photodétecteurs de manière que chaque registre à décalage à CCD horizontal (900/902/904) va recevoir des paquets de charges directement depuis les sous-réseaux respectifs (405/408/410) ; et
fournir un pixel de référence sombre (910/912/914/916) qui n'est pas inclus dans le réseau linéaire de photodétecteurs et qui est connecté électriquement à l'un desdits éléments de registre à décalage additionnels à l'opposé des sous-réseaux de photodétecteurs.

7. Procédé selon la revendication 6, comprenant en outre de prévoir lesdits un ou plusieurs éléments de registre à décalage additionnels (918/922/924/930) dans ledit au moins un registre à décalage à CCD horizontal à une extrémité du registre à décalage à CCD horizontal la plus éloignée depuis la structure de sortie (428/430/432).

8. Procédé selon la revendication 6, comprenant en outre de prévoir lesdits un ou plusieurs éléments de registre à décalage additionnel dans ledit au moins un registre à décalage à CCD horizontal à une extrémité du registre à décalage à CCD horizontal immédiatement adjacente à la structure de sortie (428/430/432).

9. Procédé selon la revendication 7, comprenant en outre de prévoir le pixel de référence sombre (910/912) connecté électriquement à chaque élément de registre à décalage additionnel à l'extrémité du registre à décalage à CCD horizontal la plus éloignée de la structure de sortie (428/430/432).

10. Procédé selon la revendication 8, comprenant en outre de prévoir le pixel de référence sombre (914/916) connecté électriquement à chaque élément de registre à décalage additionnel à l'extrémité du registre à décalage à CCD horizontal immédiatement adjacente à la structure de sortie (428/430/432).
